(19) Europäisches Patentamt
European Patent Office
Office européen des brevets

(11) **EP 3 733 987 A1**

(12) **EUROPEAN PATENT APPLICATION**

(43) Date of publication:
**04.11.2020 Bulletin 2020/45**

(51) Int Cl.:
***E03F 5/16*** (2006.01)   ***B01D 17/02*** (2006.01)
***E02B 15/10*** (2006.01)

(21) Application number: **20170930.0**

(22) Date of filing: **22.04.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.04.2019 TW 108114873**

(71) Applicant: **Jenfu Machinery Co., Ltd.
Changhua County 510 (TW)**

(72) Inventors:
• **CHANG, CHIN-LUN
510 Changhua County (TW)**
• **CHANG, CHENG-HAN
510 Changhua County (TW)**
• **CHANG, SHIH-CHIEH
510 Changhua County (TW)**

(74) Representative: **2K Patentanwälte Blasberg
Kewitz & Reichel
Partnerschaft mbB
Schumannstrasse 27
60325 Frankfurt am Main (DE)**

(54) **OIL-WATER SEPARATOR WITH OIL DISCHARGE OUTLET ADJUSTING SPONTANEOUSLY**

(57)     An oil-water separator (44) with an oil discharge outlet (620) adjusting spontaneously includes a liquid storage tank (4) with grease (31) and wastewater (32), a telescopic pipe (5) in the liquid storage tank (4), and a floater unit (6) connected with the telescopic pipe (5). The liquid storage tank (4) comprises an inlet (421) for grease (31) and wastewater (32) input, and a water outlet (422) for wastewater (32) output. The floater unit (6) comprises at least one floater (61) floating between grease (31) and wastewater (32), and an isolation member (62) extending in the height direction between the floater (61) and the telescopic pipe (5). The isolation member (62) fluctuates along with height changes of wastewater (32) and includes an oil discharge outlet (620) for grease (31) entering the telescopic pipe (5). Therefore, an oil outlet (411), adjusting height spontaneously, is configured by the at least one floater (61), such that the overall height is reduced, a sufficient difference of levels of grease (31) and wastewater (32) is generated by the isolation member (62), thereby improving the oil-water separation effect.

Fig. 4

**Description**

**FIELD OF THE INVENTION**

The invention relates to an oil-water separator, in particular to an oil-water separator with an oil discharge outlet adjusting spontaneously.

**BACKGROUND OF THE INVENTION**

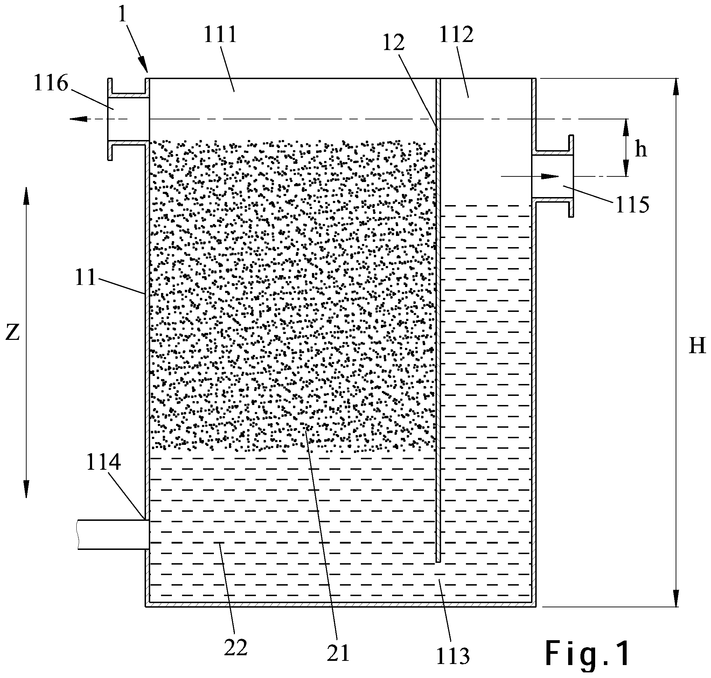

Referring to Fig. 1, a conventional oil-water separator 1 includes a liquid storage tank 11, and a partition 12 provided in the liquid storage tank 11 and defining a liquid inlet space 111, a liquid outlet space 112 and a passage 113 with the liquid storage tank 11. The liquid inlet space 111 serves to contain grease 21 and wastewater 22. The liquid outlet space 112 serves to contain wastewater 22. The passage 113 connects the liquid inlet space 111 with the liquid outlet space 112. The liquid storage tank 11 includes an inlet 114 for inputting the grease 21 and the wastewater 22 and communicating with the liquid inlet space 111, a water outlet 115 communicating with the liquid outlet space 112, and an oil outlet 116 spaced apart from the water outlet 115 at an interval h in a height direction Z and higher than the water outlet 115. The oil outlet 116 communicates with the liquid inlet space 111.

If the grease 21 and the wastewater 22 are to be separated, the grease 21 entering the liquid inlet space 111 floats on the wastewater 22 and is blocked in the liquid inlet space 111 by the partition 12 due to the characteristic that the specific gravity of the grease 21 is smaller than the specific gravity of the wastewater 22. Thereby, when the grease 21 and the wastewater 22 are gathered to a height higher than that of the oil outlet 116 and the water outlet 115 respectively, the grease 21 is discharged from the oil outlet 116 in a direction as indicated by a dotted arrow as shown in Fig. 1, and the wastewater 22 is discharged from the water outlet 115 in a direction as indicated by the solid arrow as shown in Fig. 1.

The space configuration of the conventional oil-water separator 1 has the following disadvantages:

1. A height H of the liquid storage tank 11 has to be high enough to generate a sufficient interval h, so that the grease 21 and the wastewater 22 have a large difference of levels to render a reliable separation effect. However, the overall volume cannot be effectively reduced due to a design to cooperate with the aforementioned height H.

2. A requirement of levelness has to be met to configure the liquid storage tank 11, and if the liquid storage tank 11 tilts too much, the relative positions of the oil outlet 116 and the water outlet 115 are varied, namely, the separation fails.

**SUMMARY OF THE INVENTION**

The object of the present invention is to provide an oil-water separator with an oil discharge outlet adjusting spontaneously which is simple to install and capable of reducing an overall volume thereof.

Accordingly, the oil-water separator with the oil discharge outlet adjusting spontaneously to separate a grease and a wastewater, and comprises a liquid storage tank, a telescopic pipe and a floater unit.

The liquid storage tank comprises an inlet for the grease and the wastewater input, and a water outlet for the wastewater output.

The telescopic pipe is telescopically disposed therethrough in the liquid storage tank and defines an oil-containing space communicated with outside.

The floater unit is connected with the telescopic pipe and comprises at least one floater and an isolation member extending upwards along a height direction between the at least one floater and the telescopic pipe. The specific gravity of the at least one floater is greater than the specific gravity of the grease and smaller than the specific gravity of the wastewater, and thus the at least one floater floats between the grease and the wastewater. The isolation member comprises an oil discharge outlet communicating with the oil-containing space to allow the grease to enter the oil-containing space.

The invention has the following advantages: an oil discharge outlet, which spontaneously adjusts the height, is configured on the floater, the overall height can thus be reduced. In addition, a sufficient difference of levels between the grease and the wastewater is generated by the isolation member to improve the oil-water separation effect.

**BRIEF DESCRIPTION OF THE DRAWINGS**

Fig. 1 is a schematic cross-sectional view illustrating a conventional oil-water separator;
Fig. 2 is a schematic cross-sectional view illustrating a first embodiment of an oil-water separator with an oil discharge outlet adjusting spontaneously according to the present invention;

Fig. 3 is a schematic cross-sectional view of the first embodiment when containing the wastewater;

Fig. 4 is a schematic cross-sectional view of the first embodiment when separating the grease from the wastewater;

Fig. 5 is a schematic cross-sectional view similar to Fig. 4, but with the grease drawn through a suction tube;

Fig. 6 is a schematic cross-sectional view similar to Fig. 4, but with a liquid storage tank tilted; and

Fig. 7 is a schematic cross-sectional view illustrating a second embodiment of the oil-water separator with an oil discharge outlet adjusting spontaneously according to the present invention.

## DETAILED DESCRIPTION OF THE PREFERRED EMBODIMENTS

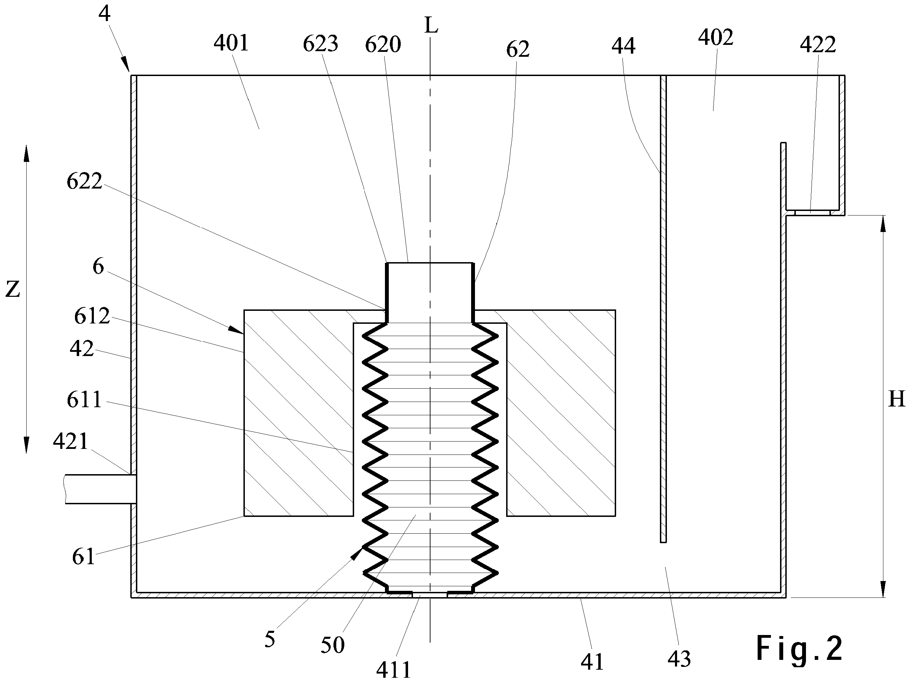

Referring to Fig. 2, Fig. 3 and Fig. 4, a first embodiment of the oil-water separator capable with an oil discharge outlet adjusting spontaneously is adapted to separate a grease 31 from a wastewater 32. In this embodiment, the oil-water separator is provided outside a wastewater pool (not shown) containing the grease 31 and the wastewater 32, and includes a liquid storage tank 4, a telescopic pipe 5, and a floater unit 6.

The liquid storage tank 4 includes a bottom wall 41, a surrounding wall 42 connected with a periphery of the bottom wall 41 and extending in a height direction Z, and a separator 44 connected with the surrounding wall 42 and defining a passage 43 with the bottom wall 41.

The bottom wall 41 comprises an oil outlet 411. The oil outlet 411 is adapted to output the grease 31.

The surrounding wall 42 comprises an inlet 421 and a water outlet 422 spaced apart at an interval. The inlet 421 is adapted to input the grease 31 and the wastewater 32. The water outlet 422 is adapted to output the wastewater 32 at a distance H from the oil outlet 411 along a height direction Z. In one embodiment, the height of the water outlet 422 in the height direction Z is greater than the height of the oil outlet 411 in the height direction Z.

It should be noted that the oil outlet 411 is not limited to the configuration on the bottom wall 41, and in other variations of the embodiment, the oil outlet 411 is provided on the surrounding wall 42.

The separator 44, the surrounding wall 42 and the bottom wall 41 together define a liquid inlet space 401 and a liquid outlet space 402 communicated through the passage 43. The liquid inlet space 401 communicates with the inlet 421 and the oil outlet 411, and is adapted to contain the grease 31 and the wastewater 32. The liquid outlet space 402 communicates with the water outlet 422 and is adapted to contain the wastewater 32. In one embodiment, the grease 31 and the wastewater 32 are drawn from the inlet 421 into the liquid inlet space 401 by a power source such as a pump (not shown) communicated with the wastewater pool and the inlet 421.

In one embodiment, the telescopic pipe 5 is a bellow connected with the bottom wall 41 of the liquid storage tank 4, and located in the liquid inlet space 401. The bellow is capable of extending and contracting along the height direction Z, and defines an oil-containing space 50 communicated with outside. In this embodiment, the oil-containing space 50 is further communicated with the oil outlet 411.

It should be noted that the telescopic pipe 5 is not limited to the bellow, but in other variations of the embodiment, the telescopic pipe 5 is a two-member or multi-member sleeve.

The floater unit 6 is connected with the telescopic pipe 5. The floater unit 6 includes a floater 61 adapted to float between the grease 31 and the wastewater 32, and an isolation member 62 extending upwards in the height direction Z between the floater 61 and the telescopic pipe 5.

In one embodiment, the floater 61 is formed as a ring around an axis L of the telescopic pipe 5, which is extending in the height direction Z, and includes an inner surface 611 and an outer surface 612 surrounding the telescopic pipe 5 and adapted to contact the grease 31 and the wastewater 32. The floater 61 has a specific gravity greater than that of the grease 31 and less than that of the wastewater 32. It should be noted that the specific gravity *(SG)* of the floater unit 6 and the telescopic pipe 5 as a whole is between 0.75 and 0.99, which is calculated as follows:

$$ SG = \frac{(W1 + W2 + W3)/Vd}{Dw} $$

wherein *W1* is a weight of the floater 61;

*W2* is a weight of the isolation member 62;

*W3* is a weight of the telescopic pipe 5;

*Vd* is a displacement volume of the floater 61;

*Dw* is a density of water.

It should be noted that the number of the floater 61 is not limited to one, and in other variations of the embodiment, two or three or more than three floaters 61 is provided around the axis L. A cross-sectional area of the floater 61 in a direction perpendicular to the axis L is larger than a cross-sectional area of the telescopic pipe 5 in the direction perpendicular to the axis L.

The isolation member 62 surrounds the axis L and comprises a connection end 622 connecting the floater 61 or the telescopic pipe 5, and an open end 623 opposite the connection end 622. The open end 623 defines an oil discharge outlet 620 communicating the oil-containing space 50 and adapted to allow the grease 31 to enter the oil-containing space 50. The oil discharge outlet 620 fluctuates along the height direction Z relative to the oil outlet 411. In one embodiment, a cross-sectional area of the floater 61 in a direction perpendicular to the axis L is larger than a cross-sectional area of the isolation member 62 in the direction perpendicular to the axis L. Preferably, the cross-sectional area of the floater 61 is more than five times larger than the cross-sectional area of the isolation member 62.

Since the grease 31 has a smaller specific gravity than the wastewater 32 and floats on the wastewater 32, when the wastewater 32 and the grease 31 are introduced into the liquid inlet space 401 from the inlet 421, the wastewater 32 is simultaneously present in the liquid inlet space 401 and the liquid outlet space 402 through the passage 43, and the grease 31 is separated by the separator 44 and confined in the liquid inlet space 401.

In the meantime, because the specific gravity of the floater 61 is larger than that of the grease 31 and smaller than that of the wastewater 32, the floater 61 sinks in the grease 31 but floats between the grease 31 and the wastewater 32 by the buoyancy of the wastewater 32. The floater 61 fluctuates along with the height change of the wastewater 32 in the liquid storage tank 4, and drives the telescopic pipe 5 to extend and contact in the height direction Z. Therefore, if the grease 31 with a smaller specific gravity accumulates in the height direction Z to flood the open end 623 of the isolation member 62, the grease 31 enters the oil-containing space 50 of the telescopic pipe 5 through the oil discharge outlet 620 and is discharged through the oil outlet 411, thereby achieving the effect of oil-water separation.

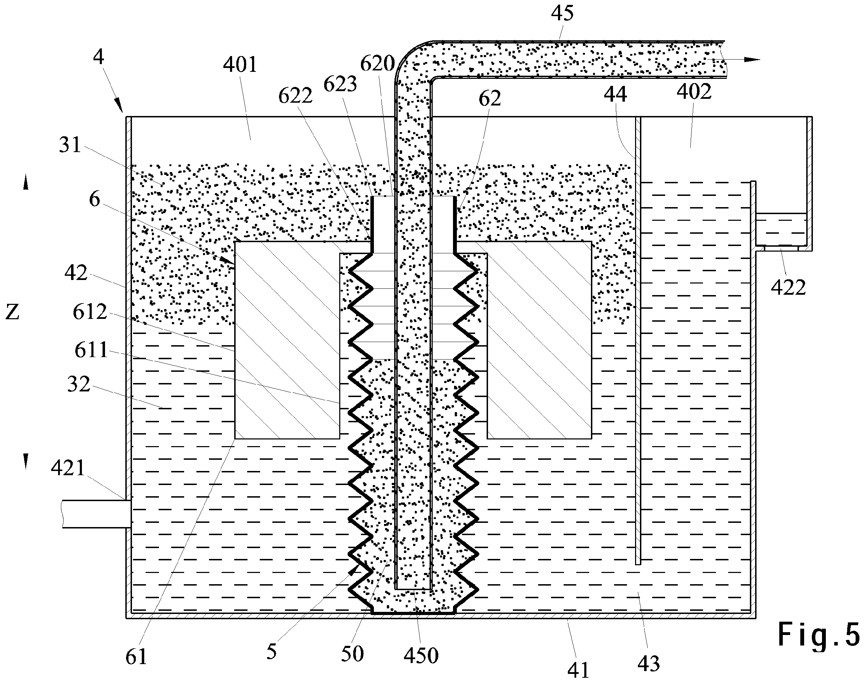

It should be noted that the oil-containing space 50 is not limited to discharging the grease 31 through the oil outlet 411, and in other variations of the embodiment, as shown in Fig. 5, the liquid storage tank 4 further includes a suction tube 45 with an oil outlet 450 defined therein and reaching into the oil-containing space 50, by which the grease 31 in the oil-containing space 50 is drawn out by a pump (not shown) communicated with the suction tube 45.

In the meantime, if the wastewater 32 remaining in the liquid outlet space 402 accumulates in the height direction Z to flood the water outlet 422, the wastewater 32 is discharged from the water outlet 422.

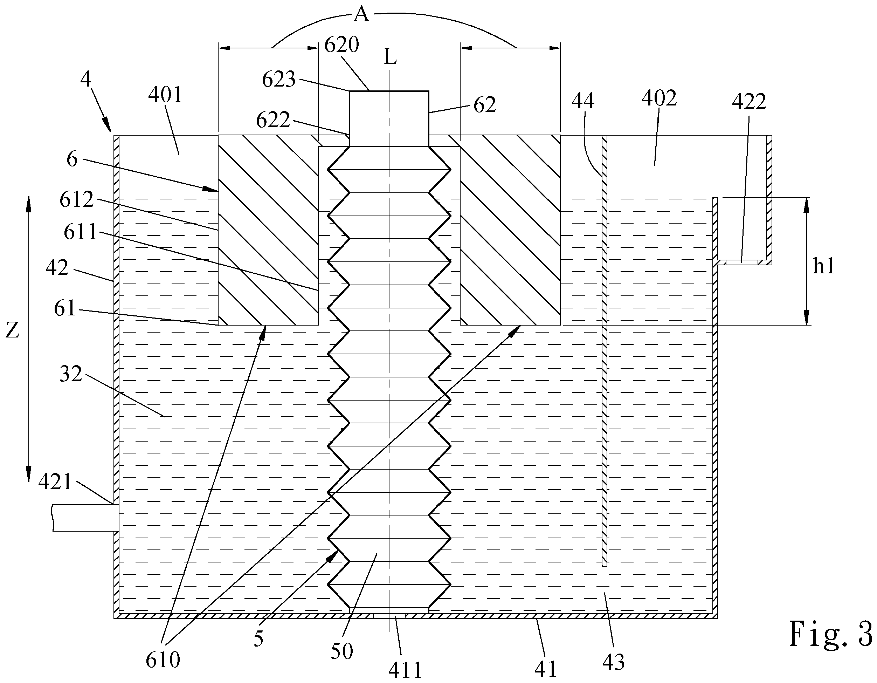

It should be noted that, as shown in Fig. 3, how the floater 61 can be maintained in an equilibrium state in an initial state where the grease 31 is absent is explained as follows:

$$W = F \qquad\qquad\qquad \text{Equation (1)}$$

$$F = V' \times \rho 1 = A \times h1 \times \rho 1 \qquad\qquad \text{Equation (2)}$$

wherein W is a weight of the telescopic pipe 5;
F is a buoyancy of the floater 61;
V' is a volume of the floater 61 under the liquid level of the wastewater 32;
$\rho 1$ is a density of water;
A is a sectional area of a bottom surface 610 of the floater 61;
h1 is a height of a lower part of the floater 61 that is sunk beneath the liquid level of the wastewater 32.

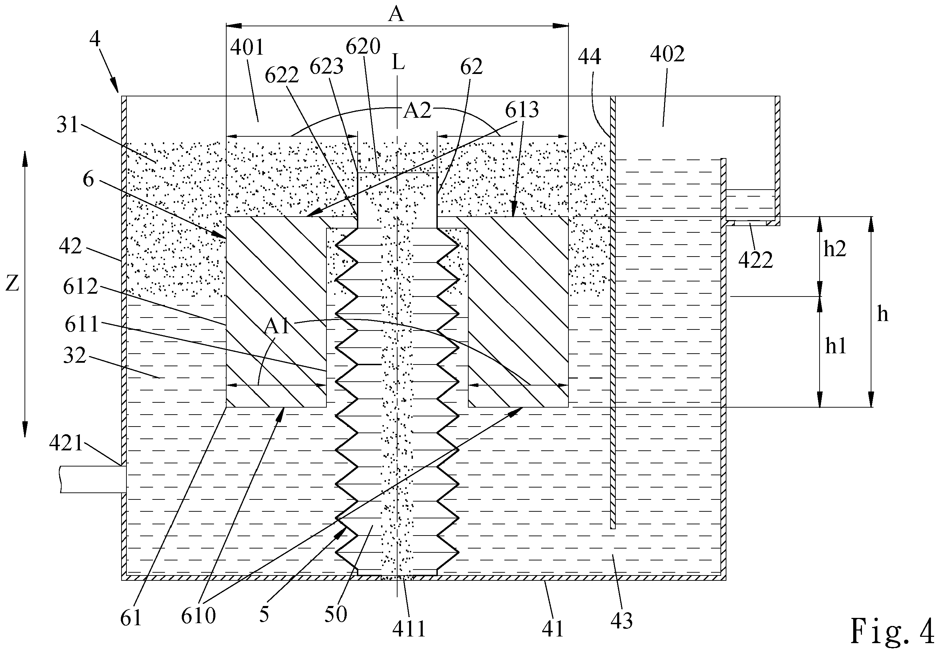

As shown in Fig. 4, how the floater unit 6 can be in an oil discharge state when the grease 31 is contained in the liquid inlet space 401 is explained as follows:

$$F = A1 \times h1 \times \rho 1 + A2 \times h2 \times \rho 2 \qquad\qquad \text{Equation (3)}$$

wherein A1 is a sectional area of the bottom surface 610 of the floater 61;
A2 is a sectional area of a top surface 613 of the floater 61.

As seen in Fig. 4, the top surface 613 of the floater 61 is submerged in the grease 31 and the bottom surface 610 of the floater 61 is submerged in the wastewater 32. For convenience of calculation, the structure of the floater 61 is designed in a way that the difference between A1 and A2 in this embodiment is small enough to be ignored. This, both A1 and A2 are equal to A respectively. So, the Equation (3) can be written as:

$$F = A \times h \times \rho 1 - A \times h2 \times (\rho 1 - \rho 2) \qquad\qquad \text{Equation (4)}$$

wherein A is a sectional area of the bottom surface 610 of the floater 61;
$\rho2$ is a density of the grease 31;
h is a height of the floater 61;
h2 is a height of an upper part of the floater 61 that is submerged in the grease 31.

Equation (4) shows that $A\times h\times\rho1$ corresponds approximately to the weight of the telescopic pipe 5 in the initial state where the grease 31 is absent, and $A\times h2\times(\rho1-\rho2)$ is a change in buoyancy. It can thus be deduced that if the grease 31 is contained in the liquid inlet space 401, the buoyancy F of the floater 61 is smaller than the buoyancy F of the floater 61 when the grease 31 is absent in the initial state; therefore, if the floater 61 sinks below the oil surface and the grease 31 accumulates in the height direction Z to flood the open end 623 of the isolation member 62, the grease 31 enters the oil-containing space 50 of the telescopic pipe 5 through the oil discharge outlet 620 and is discharged through the oil outlet 411, thereby achieving the oil-water separation effect.

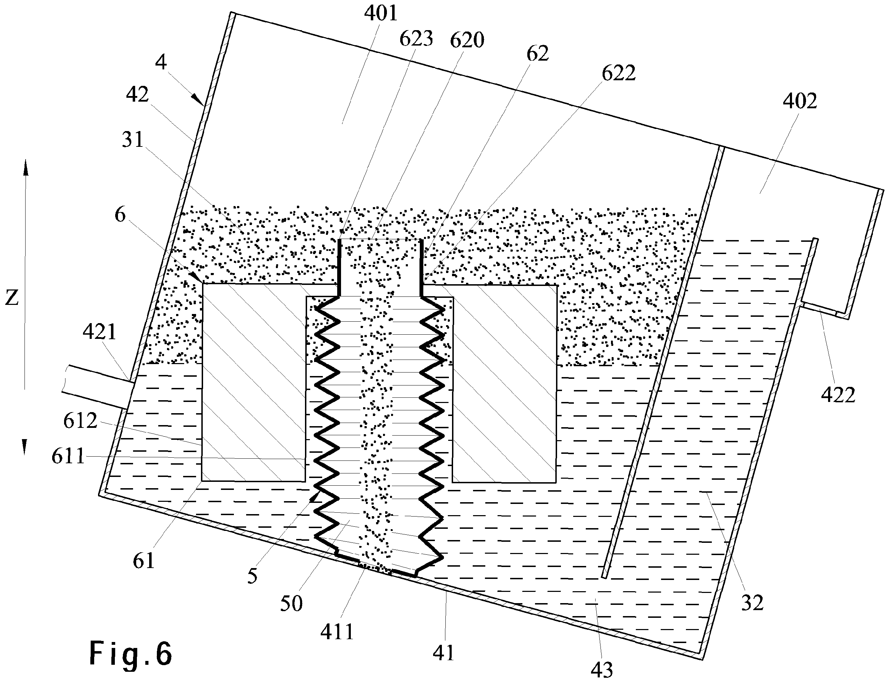

As shown in Fig. 6, there is no requirement for levelness to configure the liquid storage tank 4. If the liquid storage tank 4 is tilted, the floater 61 adjusts the position thereof along with the liquid level, thereby maintaining the relative positions of the oil discharge outlet 620 and the water outlet 422, and still having the oil-water separation effect.

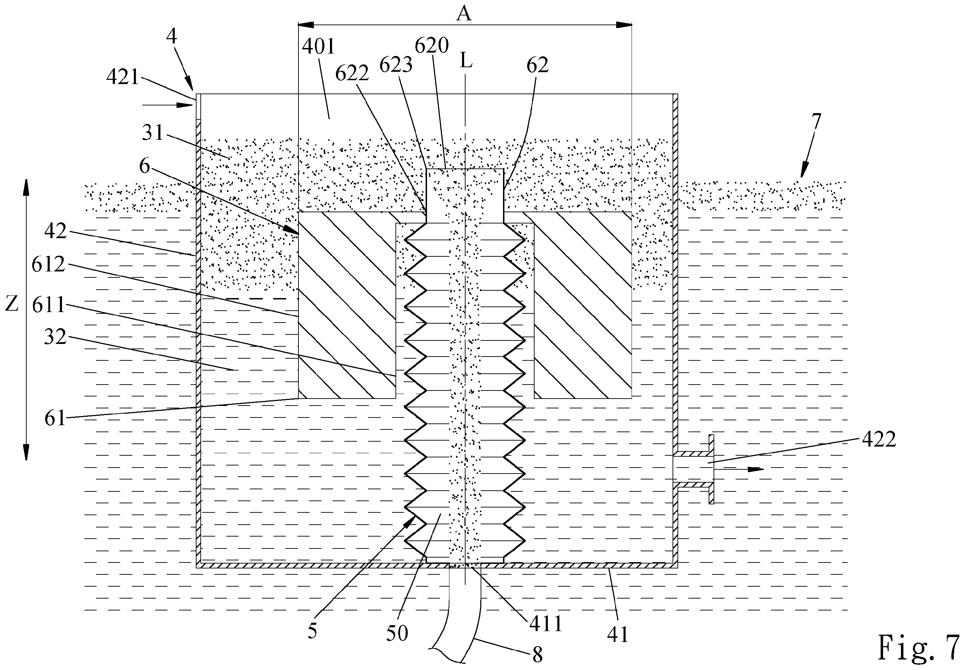

Referring to Fig. 7, a second embodiment of the present invention is substantially the same as the first embodiment, including also the liquid storage tank 4, the telescopic pipe 5, and the floater unit 6, with differences in that:
the second embodiment is adapted to be put into a wastewater pool 7 containing the grease 31 and the wastewater 32, and the liquid inlet space 401 is defined in the liquid storage tank 4 only by the surrounding wall 42 and the bottom wall 41. It should be noted that in this embodiment, the water outlet 422 is located lower along the height direction Z adjacent to the bottom wall 41 but higher than the oil outlet 411.

Therefore, As the second embodiment is put into the wastewater pool 7, the wastewater 32 and the grease 31 are introduced into the liquid inlet space 401 from the inlet 421. The heavier wastewater 32 flows back into the wastewater pool 7 directly from the liquid inlet space 401 through the water outlet 422; and while the lighter grease 31 accumulates in the height direction Z to flood the open end 623 of the isolation member 62, the grease 31 enters the oil-containing space 50 of the telescopic pipe 5 and then is discharged through a discharge pipe 8 connecting to the oil outlet 411. The discharge pipe 8 conveys the grease 31 from the oil-containing space 50 to outside. Furthermore, the grease 31 can be drawn out through a pump (not shown), thereby achieving better oil-water separation effect.

The advantages of the foregoing embodiments can be summarized as follows on the basis of the foregoing description:

1. The oil discharge outlet 620 with spontaneously adjusting the height is configured on the floater 61, the overall height can thus be reduced, and in addition, a sufficient difference of levels of the grease 31 and the wastewater 32 is generated by the isolation member 62 to improve the oil-water separation effect.

2. As shown in Fig. 6, there is no requirement for levelness to configure the liquid storage tank 4, and if the liquid storage tank 4 is tilted, the floater 61 adjusts the position thereof along with the liquid level, thereby maintaining the relative positions of the oil discharge outlet 620 and the water outlet 422. That is, the height of the oil discharge outlet 620 in the height direction Z is higher than that of the water outlet 422, and thus the oil-water separation effect is still achieved and installation is facilitated.

3. According to the foregoing, since the present invention has no levelness requirement, the second embodiment, although implemented by putting into a wastewater pool, shows no defects in the effect of oil-water separation due to the flow of the wastewater 32, thereby rendering a better applicability of the present invention.

**Claims**

1. An oil-water separator (44) with an oil discharge outlet (620) adjusting spontaneously to separate a grease (31) and a wastewater (32), comprising:

   a liquid storage tank (4), the liquid storage tank (4) comprising an inlet (421) for the grease (31) and the wastewater (32) input, and a water outlet (422) for the wastewater (32) output;
   a telescopic pipe (5), the telescopic pipe (5) disposed therethrough in the liquid storage tank (4) telescopically and defining an oil-containing space (50) communicated with outside; and
   a floater unit (6), the floater unit (6) connected with the telescopic pipe (5) and comprising at least one floater (61) and an isolation member (62) extending upwards along a height direction between the at least one floater (61) and the telescopic pipe (5), wherein a specific gravity of the at least one floater (61) is greater than a specific gravity of the grease (31) and smaller than a specific gravity of the wastewater (32), and the at least one floater (61) floats between the grease (31) and the wastewater (32); and wherein the isolation member (62) comprises an oil discharge outlet (620) communicating with the oil-containing space (50) to allow the grease (31) to enter the oil-containing space (50).

2. The oil-water separator (44) with the oil discharge outlet (620) adjusting spontaneously according to claim 1, wherein a specific gravity of the floater unit (6) and the telescopic pipe (5) as a whole is between 0.75 and 0.99.

3. The oil-water separator (44) with the oil discharge outlet (620) adjusting spontaneously according to claim 1 or 2, wherein the liquid storage tank (4) is put into a wastewater pool (7) containing the grease (31) and the wastewater (32), and defines a liquid inlet space (401) communicated with the inlet (421) and the water outlet (422) to allow the wastewater (32) in the wastewater pool (7) to enter and exit.

4. The oil-water separator (44) with the oil discharge outlet (620) adjusting spontaneously according to any of the preceding claims, wherein the liquid storage tank (4) is disposed outside a wastewater pool (7) containing the grease (31) and the wastewater (32), the liquid storage tank (4) defines a liquid inlet space (401) communicated with the inlet (421) and the water outlet (422) to allow the wastewater (32) in the wastewater pool (7) to enter and exit, and the grease (31) and the wastewater (32) are delivered into the liquid storage tank (4) by a power source; and wherein the liquid storage tank (4) further defines a liquid outlet space (402) only to contain the wastewater (32) and communicated with the water outlet (422) and includes a passage (43) communicating the liquid inlet space (401) with the liquid outlet space (402).

5. The oil-water separator (44) with the oil discharge outlet (620) adjusting spontaneously according to claim 4, wherein the liquid storage tank (4) comprises a bottom wall (41), a surrounding wall (42) connected with a periphery of the bottom wall (41) and extending in the height direction, a separator (44) connected with the surrounding wall (42) and defining the passage (43) with the bottom wall (41); and wherein the separator (44), the surrounding wall (42), and the bottom wall (41) define the liquid inlet space (401) and the liquid outlet space (402) communicated through the passage (43).

6. The oil-water separator (44) with the oil discharge outlet (620) adjusting spontaneously according to claim 5, wherein one of the bottom wall (41) and the surrounding wall (42) of the liquid storage tank (4) comprises an oil outlet (411) communicated with the oil-containing space (50) of the telescopic pipe (5) for discharging the grease (31), and the inlet (421) and the water outlet (422) are disposed on the surrounding wall (42).

7. The oil-water separator (44) with the oil discharge outlet (620) adjusting spontaneously according to any of the preceding claims, wherein the at least one floater (61) surrounds an axis (L) of the telescopic pipe (5) extending in the height direction and includes an inner surface (611) and an outer surface (612) surrounding the telescopic pipe (5) to contact the grease (31) and the wastewater (32).

8. The oil-water separator (44) with the oil discharge outlet (620) adjusting spontaneously according to claim 7, wherein a cross-sectional area of the at least one floater (61) in a direction perpendicular to the axis (L) is larger than a cross-sectional area of the telescopic pipe (5) in the direction perpendicular to the axis (L).

9. The oil-water separator (44) with the oil discharge outlet (620) adjusting spontaneously according to claim 7 or 8, wherein the isolation member (62) comprises a connection end (622) connecting either of the at least one floater (61) and the telescopic pipe (5), and an open end (623) opposite the connection end (622) and defining the oil discharge outlet (620).

10. The oil-water separator (44) with the oil discharge outlet (620) adjusting spontaneously according to claim 7, wherein a cross-sectional area of the at least one floater (61) in the direction perpendicular to the axis (L) is more than five times larger than a cross-sectional area of the isolation member (62).

Fig.1

Fig.2

Fig. 3

Fig. 4

Fig.5

Fig.6

Fig. 7

**Europäisches Patentamt**

**European Patent Office**

**Office européen des brevets**

# EUROPEAN SEARCH REPORT

Application Number

EP 20 17 0930

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 28 37 858 A1 (PASSAVANT WERKE) 13 March 1980 (1980-03-13) | 1-3,7-10 | INV. E03F5/16 B01D17/02 E02B15/10 |
| Y | * the whole document * | 4-6 | |
| X | CH 441 134 A (VON MIKUSCH BUCHBERG J DONATUS [DE]) 31 July 1967 (1967-07-31) * the whole document * | 1-4,7-10 | |
| Y | EP 0 820 796 A2 (IHNE JESSIKA [CH]) 28 January 1998 (1998-01-28) * column 2, line 41 - column 3, line 43; figure 1 * | 4-6 | |

TECHNICAL FIELDS SEARCHED (IPC)

E03F
F17C
E02C
B01D
E02B
E04H

The present search report has been drawn up for all claims

| Place of search | Date of completion of the search | Examiner |
|---|---|---|
| Munich | 15 September 2020 | Fajarnés Jessen, A |

EPO FORM 1503 03.82 (P04C01)

## ANNEX TO THE EUROPEAN SEARCH REPORT
## ON EUROPEAN PATENT APPLICATION NO.

EP 20 17 0930

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2020

| Patent document cited in search report | | Publication date | Patent family member(s) | | Publication date |
|---|---|---|---|---|---|
| DE 2837858 | A1 | 13-03-1980 | NONE | | |
| CH 441134 | A | 31-07-1967 | CH<br>DE | 441134 A<br>1434746 A1 | 31-07-1967<br>23-01-1969 |
| EP 0820796 | A2 | 28-01-1998 | DE<br>EP | 29612694 U1<br>0820796 A2 | 26-09-1996<br>28-01-1998 |

EPO FORM P0459

For more details about this annex : see Official Journal of the European Patent Office, No. 12/82